# EUROPEAN PATENT SPECIFICATION

(11) **EP 2 472 946 B1**
(45) Date of publication and mention of the grant of the patent: **09.03.2016**
(21) Application number: 11195566.2
(22) Date of filing: 23.12.2011
(51) Int. Cl.: H04L 12/24, H04L 12/26, H04L 12/14, H04L 12/811, H04W 28/02, H04L 29/06

(54) **Adaptive control of video transcoding in mobile networks**
Adaptive Steuerung von Videotranskodierung in mobilen Netzwerken
Contrôle adaptatif de transcodage vidéo dans les réseaux mobiles

(30) Priority: 28.12.2010 US 980199
(43) Date of publication of application: 04.07.2012
(73) Proprietor: Tektronix, Inc., Beaverton, Oregon 97077-0001 (US)
(72) Inventor: Wilkinson, Robert Todd, Plano, TX 75025 (US); Ivershen, Aleksey G., Garland, TX 75040 (US)
(74) Representative: Hargreaves, Timothy Edward

(56) References cited:
- EP-A1- 2 154 837
- WO-A1-2006/048842
- WO-A1-2010/112074
- US-A1- 2010 268 836

## Description

### TECHNICAL FIELD

Embodiments are directed, in general, to providing video content to mobile subscribers and, more specifically, to modifying a video transcoding based upon real-time network conditions.

### BACKGROUND

As mobile data networks continue to experience an unprecedented explosion in total network traffic, mobile devices consume large amounts of wireless network bandwidth. The increase in network traffic is largely driven by web-enabled smart phones and mobile-connected laptop computers. Within the overall network-growth trend, mobile video is expected to become the dominant consumer of mobile-data bandwidth.

With bandwidth demand exploding in mobile networks, service providers must expand their radio networks to keep up with data growth. However, adding radio transmitters to keep up with bandwidth growth is not always possible or economical. Building out the mobile networks to support these traffic volumes is expensive. All data ultimately originates or terminates at the user equipment, which requires transmission of the video data over scarce radio resources. EP 2 154 831 A1 is concerned with determining a congestion level in a cell on the basis of two thresholds. US 2010/0268836 A1 is concerned with controlling a transcoding device for limiting the data rate in case of a congestion in a cell of a wireless network. The transcoding device relies on network information from within the wireless network.

### SUMMARY

The present invention is directed to a method for controlling video transcoding according to claim 1, and a system according to claim 10. A video transcoding system controls the data rate of video data sent to user equipment in cells of a wireless network based upon cell congestion levels. Embodiments are directed to controlling bandwidth usage in a wireless network. Data is captured from network interfaces and user equipment using network monitoring equipment. The data captured from the network interfaces comprises data passively captured in a non-intrusive manner by sniffing data from the network interfaces. The monitoring equipment determines a cell congestion level from the captured data and identifies when a cell has a congestion level above a first threshold. The monitoring system transmits a first alert to a video transcoding device when the cell congestion level is above the first threshold. The first alert may be sent directly to the video transcoding device or via network policy management/enforcement entity. The monitoring system then identifies when the cell congestion level has dropped below a second threshold. The second threshold set at or below the first threshold. The monitoring system transmits a second alert to the video transcoding device when the cell congestion level is below the second threshold.

The monitoring system may further identify subscribers currently active in the cell, and may include subscribers' identities in the first alert and the second alert. The subscribers' destination addresses and/or a cell identifier may be included in the first alert and the second alert. The first alert instructs a video transcoding device to reduce a data rate for video data being sent to subscribers in the cell. The second alert instructs the video transcoding device to increase a data rate for video data being sent to subscribers in the cell.

The monitoring system, network policy management/enforcement entity, and/or transcoding device may identify a subscriber in the congested cell and retrieve a profile for the subscriber. The video transcoding rate for the subscriber may be adjusted based upon data in the profile. The video data rate may be selected for individual subscribers in the congested cell based upon a type of video data being sent to each subscriber. The new data rate for individual subscribers in the congested cell may also be selected based upon a subscriber profile.

In one embodiment, the system for controlling video data rates in a wireless network comprises a plurality of monitoring probes coupled to one or more network interfaces, wherein the monitoring probes adapted to capture data from the network interfaces. The system includes a processor adapted to analyze the data captured from the network interfaces. The processor determines a cell congestion level from the captured data, identifies cells having a congestion level above a first threshold, transmits a first alert to a network policy management entity when a cell is above the first threshold, identifies cells having a congestion level below a second threshold, the second threshold set at or below the first threshold, and transmits a second alert to the network policy management entity when the cell is below the second threshold.

The network policy management entity may be adapted to identify video data rate policies associated with the subscribers currently active in the cell and to enforce the video data rate policies based upon a current cell congestion level. The network policy management entity is a Policy Enforcement Point (PEP), a Policy Decision Point (PDP), a Policy Charging and Control (PCC) function, a Policy and Charging Rules Function (PCRF), or a Policy and Charging Execution Function (PCEF).

The network interfaces may include an Iub interface, an Iu-CS interface, an Iu-PS interface, an S1-MME interface, an X2 interface, and/or an S11 interface.

A video transcoding device is coupled to the network interfaces and, under control of the network policy management entity and/or the monitoring system, modifies a data rate for video data being transmitted to the congested cell. The video data rate provided to one or more subscribers in the congested cell is based upon a subscriber profile or a user equipment type.

### BRIEF DESCRIPTION OF THE DRAWINGS

Having thus described the invention in general terms, reference will now be made to the accompanying drawings, wherein:
FIGURE 1 is a high-level block diagram illustrating the components of a Universal Mobile Telecommunications System (UMTS) 3GT network;
FIGURE 2 is a block diagram illustrating the LTE (Long Term Evolution)/SAE (System Architecture Evolution) 4G network architecture; and
FIGURE 3 is a flowchart illustrating an exemplary process for adjusting video transcoding rates in response to cell congestion.

### DETAILED DESCRIPTION

The invention now will be described more fully hereinafter with reference to the accompanying drawings. This invention may, however, be embodied in many different forms and should not be construed as limited to the embodiments set forth herein. Rather, these embodiments are provided so that this disclosure will be thorough and complete, and will fully convey the scope of the invention to those skilled in the art. One skilled in the art may be able to use the various embodiments of the invention.

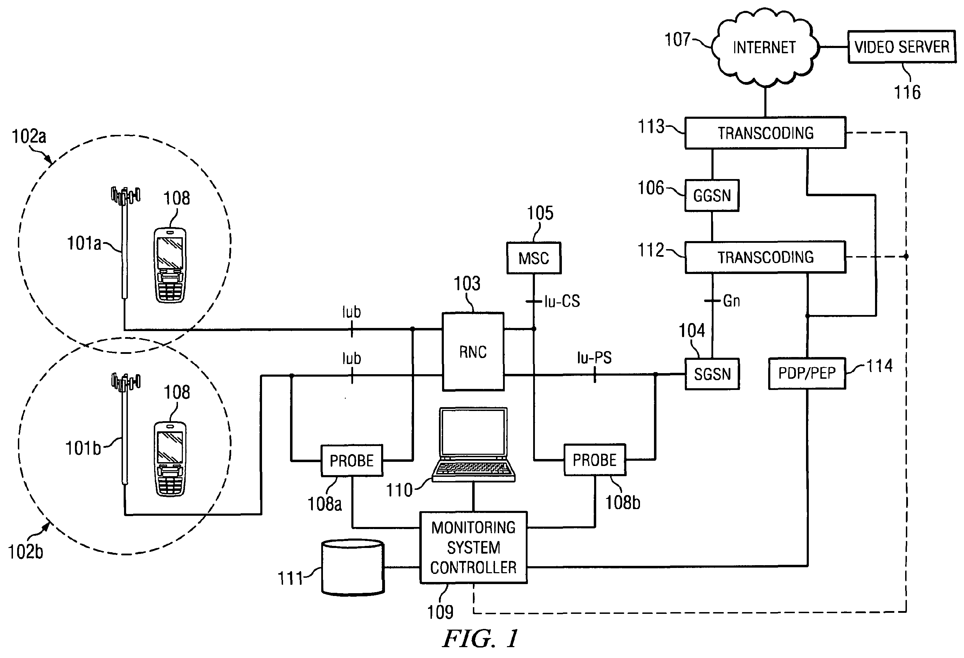

FIGURE 1 is a high-level block diagram illustrating the components of a Universal Mobile Telecommunications System (UMTS) 3G network, which may include UTRAN (Universal Terrestrial Radio Access Network) and GERAN (GSM EDGE Radio Access Network) elements. A plurality of NodeB network elements 101 serve subscribers in respective cells 102 and are connected to RNC 103 via an Iub interface. The RNC 103 is coupled to SGSN 104 via an Iu-PS interface and to MSC 105 via an Iu-CS interface. SGSN 104 is coupled via a Gn interface to GGSN 106, which provides access to Internet 107. User equipment (UE) 108 within a cell 102 communicates with the respective NodeB 101.

A monitoring system, including, for example, probes 108 and monitoring system controller 109, is coupled to the Iub and/or the Iu interfaces. Probes 108 collect PDUs and session data from the interfaces, such as RRC and NBAP messages from the Iub interfaces and ALCAP and RANAP messages from Iu interfaces. A service provider or network operator may access data from monitoring system 109 via user interface station 110. Monitoring system 109 may further comprise internal or external memory 111 for storing captured data packets, user session data, call records configuration information, and software application instructions.

The monitoring system may be located in one location, such as a server or equipment rack in which probes 108a and 108b run on separate blades. Alternatively, probes 108a and 108b may be located near RNC 103 or SGSN 104 and remote from monitoring system controller 109. Probes 108 and monitoring system controller 109 comprises one or more processors running one or more software applications.

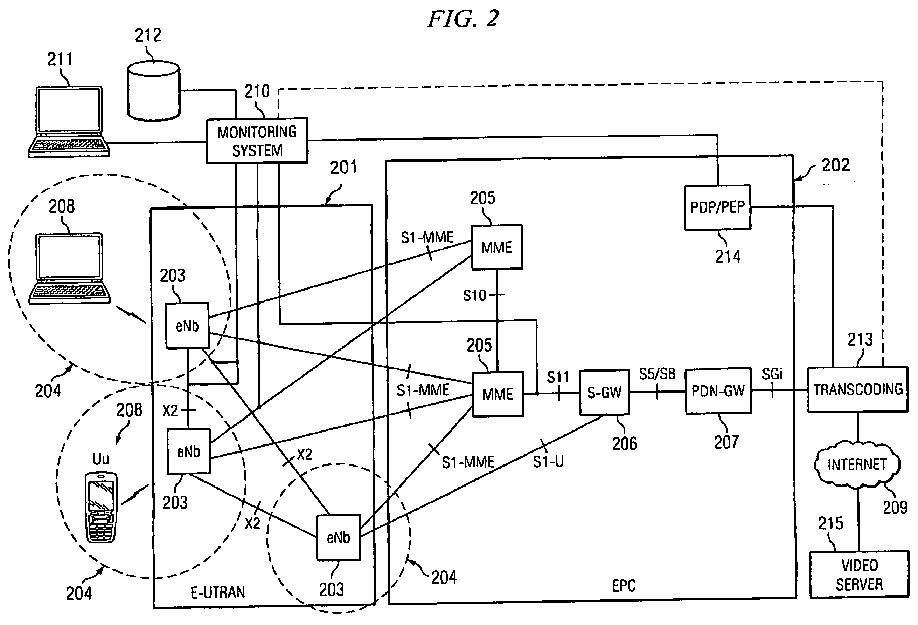

FIGURE 2 is a block diagram illustrating the LTE (Long Term Evolution)/SAE (System Architecture Evolution) 4G network architecture. The LTE/SAE network technology represents mobile network evolution to provide high-rate IP-based services. The standardization entity in charge of specifying the mobile standards, which is known as the 3^{rd} Generation Partnership Project (3GPP), has defined standards for mobile telecommunication systems, including both the radio access and the core network evolution. The standard is named Evolved Packet System (EPS), and it specifies the evolution of the UTRAN access network - the evolved UTRAN (eUTRAN) 201 - and the concurrent evolution of the Core network - the Evolved Packet Core (EPC) 202. LTE and SAE are commonly used synonyms for eUTRAN 201 and EPC 202, respectively.

The network comprises a number of different types of network nodes and interfaces. The nodes include, for example, enhanced NodeBs (eNodeB or eNb) 203 that services subscribers in cells 204, Mobility Management Entity (MME) 205, Serving Gateway (S-GW) 206, and Packet Data Network Gateway (PDN-GW) 207. The interfaces between the nodes in the EPC domain are generally named "S#." The "X2" interface (between eNodeBs) and "Uu" interface (air interface between eNodeBs 203 and User Equipment 208) are in the eUTRAN domain.

The goal of the EPS technology is to significantly enhance the bandwidth available to users and, at the same time, improve the Quality of Service (QoS) of the radio connection. The following nodes operate within the eUTRAN domain. User Equipment (UE) 208 is the subscriber endpoint of the end-to-end services. UE 208 communicates over the Uu interface to eNodeBs 203 on the radio path. eNodeB 203 manages the radio path to UE 208 and hosts the physical radio establishment, radio link control, and medium access control functions. eNodeB 203 also encrypts and decrypts data toward the radio path and handles the radio resource admission and management.

The following nodes operate within the EPC domain. MME 205 is the node responsible for managing the non access stratum (NAS) control plane messages from/to the UE 208. In addition, MME 205 plays a role in selecting S-GW 206 for user plane traffic, coordinates handover in LTE/SAE, and establishes the necessary authentication and security procedures. MME 205 also coordinates the bearer assignment to the UE 208. S-GW 206 is the endpoint of user plane connections from eNodeB nodes 203. S-GW 106 is an anchor for user plane connections in case of UE handover between eNodeBs 203. PDN-GW (207) is the network node that provides an interface between the EPC with external PDN networks, such as the Internet 209.

In a complex system such as an LTE/SAE network, the tasks of measuring network performance, troubleshooting network operation, and controlling network service behavior can be very difficult for the network operator. Evolution of the network, such as the introduction and deployment of new network technology, causes additional instability and further problems in network measurement, troubleshooting and control. In order to perform these tasks, network operators often make use of external monitoring systems, such as monitoring system 109 (FIGURE 1). These monitoring systems are typically connected to the network in a non-intrusive mode that allows them to sniff data from the network interfaces, processing the data and provide measurements and reports that help the network operator to manage its network. The monitoring system typically needs to track the UEs' activities in order to provide detailed analysis of the services used by the subscribers and to collect information about the network's behavior for troubleshooting and optimization purposes.

A monitoring system 210 may be coupled to links in the LTE/SAE network to passively monitor and collect signaling data from one or more interfaces in the network. Monitoring system 210 may collect user plane and control plane data from the EPC and eUTRAN interfaces, including, for example, the S1-MME, S10, and S11 interfaces that have an MME 205 as an endpoint and S1-MME and X2 interfaces that have an eNodeB 203 as an endpoint. It will be understood that some or all of the other interfaces or links in the network may also be monitored by monitoring system 210. The monitoring system 210 may comprise, in one embodiment, one or more processors running one or more software applications that collect, correlate and analyze Protocol Data Units (PDU) and data packets from eUTRAN 201 and EPC 202.

A service provider or network operator may access data from monitoring system 210 via user interface station 211. Monitoring system 210 may further comprise internal or external memory 212 for storing captured data packets, user session data, call records configuration information, and software application instructions.

The monitoring systems 108-111 (FIGURE 1) and 210-212 (FIGURE 2) may incorporate protocol analyzer, session analyzer, and/or traffic analyzer functionality that provides OSI (Open Systems Interconnection) layer 2 to layer 7 troubleshooting by characterizing IP traffic by links, nodes, applications and servers on the network. Such functionality is provided, for example, by the GeoProbe G10 platform, including the Iris Analyzer Toolset applications and SpIprobes, from Tektronix Incorporated. It will be understood that the monitoring systems illustrated in FIGURES 1 and 2 are simplified and that any number of interconnected monitoring system probes may be coupled to one or more interfaces within the networks. A single monitoring probe may capture data from a particular interface, or two or more probes may be coupled to one interface.

The monitoring systems may be coupled to network interfaces via packet capture devices, such as high-speed, high-density probes that are optimized to handle high bandwidth IP traffic. The monitoring system passively captures message traffic from the interfaces without interrupting the network's operation. The monitoring system may capture and correlate the packets associated with specific data sessions on network interfaces. In one embodiment, related packets can be correlated using a 5-tuple association mechanism. The 5-tuple association process uses an IP correlation key that consists of 5 parts - server IP address, client IP address, source port, destination port, and Layer 4 Protocol (TCP or UDP or SCTP). The related packets can be combined into a record for a particular flow, session or call on the network.

In an alternative embodiment, the monitoring system may be an active component, such as a software agent, that resides on an MME or RNC, for example, and that captures data packets passing into or out of the node.

Streaming video that originates from prerecorded video files or from live video feeds is very popular with subscribers on 3G and 4G wireless networks. The video stream typically originates at a source outside the mobile network and often must be accessed via the Internet (107, 209). For example, a wireless subscriber (e.g. UE 108 or 208) may establish a data session with a remote video server (116, 215). In a 3G network (FIGURE 1), the data session is created through RNC 103, SGSN 104 and GGSN 106 to Internet 107 and then to the video source 116. In a 4G network (FIGURE 2), the data session is created through MME 205, S-GW 206, and PDN-GW 207 to Internet 209 and again to the video source 215. The wireless subscriber selects stored video files or live video feeds from the video source (116, 215), such as via a webpage hosted on a server.

The video server begins sending video data packets for the selected video through the Internet and across the 3G or 4G network to the subscriber. The video packets comprise video information that has been compressed using a selected video compression protocol. The rate at which the video information may be transmitted through the 3G or 4G networks is determined by the current capability of the network links. If the network is experiencing a high traffic load, the network may not have sufficient bandwidth to establish the video connection. In the event that the session is established between the UE and the video source, the video packets may be delayed.

In some situations, may be the video packets may not reach the subscriber at a sufficient rate for the UE to accurately display the selected video. The UE may display video that freezes while waiting for the next video data. Subscribers usually find this type of video difficult to watch and the result is a low Quality of Experience (QoE) for video services on the network. For example, if a selected video requires 800 kpbs, but the mobile network only has 500 kbps capacity available, then the network may not establish the session. If the network does establish a session, the available bandwidth will not support delivery of the video at 800 kbps, which will result in an extremely poor experience for the subscriber. At best, the subscriber will see a start/stop playback as the UE continually runs out of buffered data and then has to refill the buffer.

Video transcoding may be used to optimize video delivery over mobile 3G and 4G networks. Typically, transcoding devices are designed to transcode video content to a lower bit rate. For example, video packets that are originally transmitted at 800 kbps can be re-encoded by the transcoder to 400-500 kbps with very little degradation in user-perceived quality. Transcoding can also be applied to reduce screen resolution where appropriate. Most subscriber equipment, such as mobile phones and PDAs, has a small display screen. Images usually can be displayed at a lower resolution on these small screens without significant loss of user enjoyment. The video data may be reduced by reducing the screen resolution, which may result in a lower overall data rate that can be supported by the network.

The video data is transcoded to a lower bit rate prior to entering the mobile network or at the edge of the network. Then the transcoded, lower-rate data is sent to the subscriber. These bit-rate reductions correspond to direct savings in network utilization which provides two significant benefits to mobile operators: reduced capex/opex (the same content can be delivered with less infrastructure) and improved QoE (optimizing the bandwidth enables more users to have good QoE).

While the use of video transcoding is effective, there is no current solution to use transcoding in an adaptive manner based upon real-time knowledge of the mobile network's conditions. Instead, current solutions assume a certain level of available bandwidth and then reduce all video data rates without regard to actual network conditions. Without feedback or network condition information, the transcoding process has to be configured in a static manner. The operator may at best designate different transcoding settings by time of day. Additionally, the video transcoding systems have no knowledge of, or feedback regarding, the network resources that are impacted by a particular optimization decision. Using a network intelligence system, such as the network monitoring systems described above, real-time data is available that can be used to select a transcoding rate in a way that optimizes QoE and resource usage based on what is actually occurring in the network.

Often resource shortages in the radio access portion of the mobile network, such as cell congestion, cause the reduced video data rate. Embodiments of the monitoring system may identify the presence or absence of congestion to the cell level. The monitoring system may then feed this information to a policy control function. When cell congestion occurs, the video transcoding is set to more aggressive levels for content delivered to the congested cells. When cell congestion levels drop, transcoding is reverted to default less aggressive levels.

In a 3G network, such as illustrated in FIGURE 1, transcoding may be performed before or after GGSN 106 at location 112 or 113. A Policy Decision Point (PDP)/Policy Enforcement Point (PEP) 114 may control transcoding 112, 113 based upon information from the monitoring system. For example, when monitoring system 109 identifies cell congestion in cell 102a or 102b, the monitoring system 109 notifies PDP/PEP 114 of the congestion level. PDP/PEP 114 then directs transcoding 112, 113 to use a lower video data rate for packets addressed to UE in the congested cell or cells. In other embodiments, the monitoring system identifies cell congestion limitations directly to the transcoding equipment 112, 113 without using PDP/PEP 114.

Embodiments of the monitoring system also support other adaptive transcoding scenarios. The monitoring system may classify video traffic into customer segments, such as by identifying high-value or non-high-value subscribers or certain equipment types, and then apply different transcoding schemes to enhance QoE for desired segments.

The monitoring system may also monitor radio key performance indicators (KPIs), such as interference levels, and apply different transcoding schemes to improve QoE issues caused by radio impairment.

The benefits of transcoding can be maximized using the monitoring system information. In the presence of network congestion, more users can continue to receive video by using more aggressive transcoding optimization. In the absence of network congestion, user experience is enhanced by using less aggressive transcoding, thus improving video quality. In any scenario, carrier network infrastructure may be reduced for any network with a predominance of mobile video traffic, which is expected for al. mobile networks in the near future. Reduced infrastructure means immediate capex avoidance and ongoing opex savings.

A service provider may establish policies that control how transcoding is handled within the network. In one embodiment, the policy enforcement is based upon cell congestion. If the service provider knows what types of subscribers are using the network and can identify where cell congestion occurs, then the service provider can throttle video rates to keep the available bandwidth at a level that will service more subscribers in the network. The monitoring system identifies which subscribers are entering a cell, which subscribers are leaving a cell, and which subscribers are current in the cell. Using that information, the monitoring system can identify congested cells. For example, Radio Resource Control (RRC) messages and Radio Access Bearer (RAB) messages can be used to identify when subscribers attach to a NodeB and when an attached subscriber attempts to make a call. By identifying which subscribers are using the bandwidth and the type of use (e.g. voice, high speed data, low speed data), the service provider can identify when a cell is approaching or at congestion. The monitoring system can provide alerts or triggers to the PDP/PEP when a cell is in a near-congestion or congestion state. Video data rates can then be controlled to reduce the cell congestion or to minimize the effects of the cell congestion.

Similarly, in a 4G network, as illustrated in FIGURE 2, the transcoding may be performed by element 213 between PDN-GW 207 and Internet 209. PDP/PEP 214 may control transcoding 213 using information from monitoring system 210.

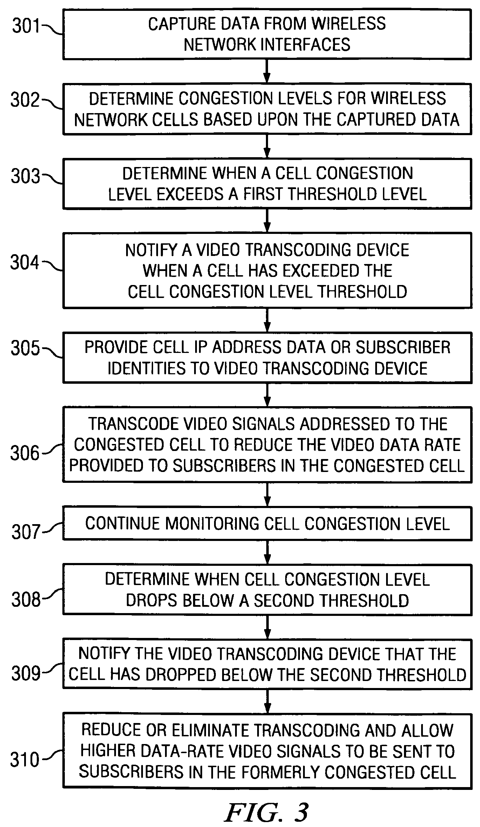

FIGURE 3 is a flowchart illustrating an exemplary process for adjusting video transcoding rates in response to cell congestion. In step 301, data is captured from wireless network interfaces. A monitoring system, such as described above, may be used to capture the data from message traffic on the network interfaces. In step 302, the monitoring system or other processing device determines congestion levels for cells in the wireless network cells. The cell congestion levels are determined based upon the captured data, such as radio resource allocation messages and UE attachment messages. Additionally, messages establishing a voice and data session with the UE in each cell may be monitored to identify traffic levels in each cell.

In step 303, the monitoring system determines when a cell congestion level exceeds a first threshold level. The first threshold level may be selected, for example, to indicate a point where only a certain percentage of the cell's usable bandwidth remains, or when the amount of bandwidth in use exceeds a certain level. In step 304, the monitoring system notifies a video transcoding device when a cell has exceeded the cell congestion level threshold. The monitoring system may communicate with the video transcoding device directly or through an intermediary, such as a policy decision point/policy enforcement point. The monitoring system provides a cell identifier, a list of IP addresses data, and/or a list of subscriber identities to video transcoding device in step 305. The cell identifier, the list of IP addresses, and/or the list of subscriber identities is used by the video transcoding device to identify which data packets are being sent to the congested cell. For example, the video transcoding device may analyze the destination IP address or the UE or subscriber identify for incoming video packets.

In step 306, the video transcoding device transcodes some or all of the video signals that are addressed to the congested cell. The transcoding has the effect of reducing the video data rate that is being provided to subscribers in the congested cell. The transcoding effects may be implemented in any appropriate manner that will allow the user equipment to continue processing and displaying the incoming video data. For example, the transcoding device or another device, such as the monitoring system or policy decision point/policy enforcement point, may transmit a message to the NodeB serving the congested cell or to the user equipment in the congested cell to notify them of an upcoming (gradual or abrupt) change in the video data rate.

In step 307, the monitoring system continues monitoring cell congestion level, and determines when cell congestion level drops below a second threshold in step 308. The monitoring system then notifies the video transcoding device that the cell has dropped below the second threshold in step 309. While the second threshold can be set at any value, in one embodiment, the second threshold is set below the first threshold to prevent hysteresis in the video coding rate. This avoids the situation in which the video coding rate cycles back and forth between a normal and a reduced coding rate due to slight changes in the cell congestion level. In one embodiment, for example, the first threshold may be set at 80% of the cell's resources or capacity. When the amount of available bandwidth reaches 80% or when 80% of the available radio resources in the cell are assigned, then the monitoring system will notify the video transcoding device, which reduces the video data rate for subscribers and user equipment in that cell. The initial reduction in the video data rate is likely to have the effect of immediately reducing the amount of bandwidth in use, but without a change in actual demand. The demand level for the second threshold must be set lower than the first threshold, or the apparent reduction in bandwidth usage caused by the initial data rate reduction will trigger the system to indicate that the video data rate may be increased again.

In other embodiments, multiple congestion or demand thresholds may be set so that the monitoring system and video transcoding devices can gradually step-down the video data rate as demand increases and correspondingly gradually increase the video data rate as the demand decreases. In step 310, after receiving the notification from step 309, the video transcoder reduces or eliminates the video data rate transcoding and allows higher data-rate video signals to be sent to subscribers in the formerly congested cell.

In further embodiments, the monitoring system and the video transcoding system may treat the subscribers in the cell as a group or individually. The video transcoding may be applied to all subscribers in the cell uniformly, or the video transcoding rate for each subscriber may be selected independently. The monitoring system may rank the subscribers or user equipment in the congested cell by their respective video usage or demand levels. A subscriber that is streaming a live video feed or downloading a large video file, such as a movie, may be ranked higher on a usage scale compared to a subscriber who occasionally or sporadically downloads video files. The monitoring system may identify a live video feed or a movie video based upon observing the transfer of a predetermined amount of data over a preset period from the same source to the subscriber. The monitoring system and/or the video transcoding device may treat different subscribers in a different manner depending upon the type and amount of video data being downloaded. For example, the monitoring system may throttle the video data rate for high video users, such as subscribers who are streaming live video feeds, faster than the occasional users. In other systems, the high user or subscribers who are currently streaming a video feed may be allowed to remain at their current level of use, while new video demands are subject to reduced video data rates.

Alternatively, each user may be assigned a subscriber profile based upon, for example, a service contract or user equipment type. The monitoring system, PDP/PEP, and/or video transcoding device may determine how individual subscriber's video is adjusted based upon the subscriber's profile.

Cell congestion levels may be determined, for example, by identifying a Radio Access Bearer (RAB) connection rejection or release having a Radio Resource Control (RRC) cause value corresponding to congestion, re-establishment release or pre-emptive release. Alternatively, cell congestion levels can be determined by identifying a Node B Application Part (NBAP) cause value corresponding to Downlink (DL) radio resources not available, Uplink (UL) radio resources not available, or NodeB resources unavailable. The monitoring system may capture messages from network interfaces such as Radio Access Network (RAN), UTRAN and eUTRAN interfaces, including Iub, Iu-CS, Iu-PS, S1-MME, X2 and S11 interfaces.

The monitoring system may communicate with a network policy management entity, such as a Policy Enforcement Point (PEP), a Policy Decision Point (PDP), a Policy Charging and Control (PCC) function, a Policy and Charging Rules Function (PCRF), or a Policy and Charging Execution Function (PCEF), to enforce video data rate control in congested cells.

Many modifications and other embodiments of the invention will come to mind to one skilled in the art to which this invention pertains having the benefit of the teachings presented in the foregoing descriptions, and the associated drawings. Therefore, it is to be understood that the invention is not to be limited to the specific embodiments disclosed. Although specific terms are employed herein, they are used in a generic and descriptive sense only and not for purposes of limitation.

## Claims

1. A method for controlling video transcoding in a wireless network (101-104, 201-202) comprising:
capturing (301) data from network interfaces and user equipment (108, 208); determining (302) a cell congestion level from the captured data, wherein the data captured from the network interfaces comprises data passively captured in a non-intrusive manner by sniffing data from the network interfaces;
identifying (303) when a cell (102, 204) has a congestion level above a first threshold, the first threshold set at a point below a maximum capacity of the cell (102, 204);
transmitting (304) a first alert to a video transcoding device (112, 113, 213) when the cell congestion level is above the first threshold;
identifying (308) when the cell congestion level has dropped below a second threshold, the second threshold set at or below the first threshold; and
transmitting (309) a second alert to the video transcoding device when the cell (112, 113, 213) congestion level is below the second threshold.

2. The method of claim 1, further comprising:
identifying (305) subscribers currently active in the cell (102, 204); and
including subscribers' identities in the first alert and the second alert.

3. The method of claim 1, further comprising:
identifying (305) destination addresses for subscribers currently active in the cell (102, 204); and
including subscribers' destination addresses in the first alert and the second alert.

4. The method of claim 1, further comprising:
identifying a cell identifier for the cell (102, 204); and
including the cell identifier in the first alert and the second alert.

5. The method of claim 1, wherein the first alert (306) instructs the video transcoding device (112, 113, 213) to reduce a data rate for video data being sent to subscribers in the cell (102, 204), and the second alert instructs the video transcoding device to increase a data rate for video data being sent to subscribers in the cell (102, 204).

6. The method of claim 1, further comprising:
identifying a subscriber in the congested cell (102, 204);
retrieving a profile for the subscriber; and
adjusting (306) a video transcoding rate for the subscriber based upon data in the profile.

7. The method of claim 1, further comprising:
reducing a data rate, using a video transcoding device (112, 113, 213), for video data directed to subscribers in the congested cell (102, 204).

8. The method of claim 7, further comprising:
selecting a new data rate for individual subscribers in the congested cell (102, 204) based upon a type of video data being sent to each subscriber.

9. The method of claim 7, further comprising:
selecting a new data rate for individual subscribers in the congested cell (102, 204) based upon a subscriber profile.

10. A system for controlling video transcoding in a wireless network (101-104, 201-202), comprising:
a processor (109, 210) adapted to analyze data, wherein the processor (109, 201) is further adapted to:
determine (302) a cell congestion level from the data;
identify (303) when cell a (102, 204) has a congestion level above a first threshold;
transmit (304) a first alert to a network policy management entity (114, 214) controlling a video transcoding device (112, 113, 213) when the cell congestion level is above the first threshold;
identify (308) when the cell congestion level has dropped below a second threshold, the second threshold set at or below the first threshold; and
transmit (309) a second alert to the network policy management entity when the cell congestion level is below the second threshold;
wherein
- a plurality of monitoring probes (108a, 108b) are coupled to one or more network interfaces, the monitoring probes adapted to capture data passively from the network interfaces in a non-intrusive mode by sniffing data from the network interfaces; and
- the processor (109, 210) is adapted to analyze, as said data, the data captured from the network interfaces.

11. The system of claim 10, wherein the network policy management entity (114, 214) is adapted to identify video data rate policies associated with the subscribers currently active in the cell and to enforce the video data rate policies based upon a current cell congestion level.

12. The system of claim 10 wherein the network policy management entity (114, 214) is a Policy Enforcement Point, PEP, a Policy Decision Point, PDP, a Policy Charging and Control, PCC, function, a Policy and Charging Rules Function, PCRF, or a Policy and Charging Execution Function, PCEF.

13. The system of claim 10, wherein the network interfaces are Radio Access Network , RAN, interfaces.

14. The system of claim 10, wherein the network interfaces comprise at least one of an lub interface, an lu-CS interface, and an lu-PS interface.

15. The system of claim 10, wherein the network interfaces comprise at least one of an S1-MME interface, an X2 interface, and an S11 interface.

16. The system of claim 10, further comprising:
a video transcoding device coupled to the network interfaces and, under control of the network policy management entity, adapted to modify a data rate for video data being transmitted to the congested cell.

17. The system of claim 16, wherein the network policy management entity (114, 214) is further adapted to enforce the policies by limiting video data provided to one or more subscribers in the cell based upon a subscriber profile.

18. The system of claim 16, wherein the network policy management entity (114, 214) is further adapted to enforce the policies by limiting video data provided to one or more subscribers in the cell (102, 204) based upon a user equipment type (108, 208).

## Patentansprüche

1. Verfahren zum Steuern der Video-Umcodierung in einem drahtlosen Netzwerk (101-104, 201-202), umfassend:
Erfassen (301) von Daten von Netzwerkschnittstellen und Benutzereinrichtungen (108, 208);
Bestimmen (302) eines Zellenüberbelegungsgrades aus den erfassten Daten, worin die Daten, die von den Netzwerkschnittstellen erfasst wurden, Daten umfassen, die auf unaufdringliche Weise durch Sniffing von Daten von den Netzwerkschnittstellen passiv erfasst wurden;
Erkennen (303), wann eine Zelle (102, 204) einen Überbelegungsgrad oberhalb eines ersten Schwellwerts hat, wobei der erste Schwellwert auf einen Punkt unterhalb einer maximalen Kapazität der Zelle (102, 204) eingestellt ist;
Übertragen (304) einer ersten Warnmeldung zu einer Video-Umcodiervorrichtung (112, 113, 213), wenn der Zellenüberbelegungsgrad oberhalb des ersten Schwellwerts ist;
Erkennen (308), wann der Zellenüberbelegungsgrad unter einen zweiten Schwellwert gesunken ist, wobei der zweite Schwellwert auf oder unter den ersten Schwellwert eingestellt ist; und
Übertragen (309) einer zweiten Warnmeldung zu der Video-Umcodiervorrichtung (112, 113, 213), wenn der Zellenüberbelegungsgrad unterhalb des zweiten Schwellwerts ist.

2. Verfahren nach Anspruch 1, ferner umfassend:
Erkennen (305) von Teilnehmern, die gegenwärtig in der Zelle (102, 204) aktiv sind; und
Einbeziehen von Teilnehmeridentitäten in die erste Warnmeldung und die zweite Warnmeldung.

3. Verfahren nach Anspruch 1, ferner umfassend:
Erkennen (305) von Zieladressen für Teilnehmer, die gegenwärtig in der Zelle (102, 204) aktiv sind; und
Einbeziehen von Teilnehmer-Zieladressen in die erste Warnmeldung und die zweite Warnmeldung.

4. Verfahren nach Anspruch 1, ferner umfassend:
Erkennen einer Zellenkennung für die Zelle (102, 204); und
Einbeziehen der Zellenkennung in die erste Warnmeldung und die zweite Warnmeldung.

5. Verfahren nach Anspruch 1, worin die erste Warnmeldung (306) die Video-Umcodiervorrichtung (112, 113, 213) anweist, eine Datenrate für Videodaten, die an Teilnehmer in der Zelle (102, 204) gesendet werden, zu verringern, und die zweite Warnmeldung die Video-Umcodiervorrichtung anweist, eine Datenrate für Videodaten, die an Teilnehmer in der Zelle (102, 204) gesendet werden, zu erhöhen.

6. Verfahren nach Anspruch 1, ferner umfassend:
Erkennen eines Teilnehmers in der überbelegten Zelle (102, 204);
Abrufen eines Profils für den Teilnehmer; und
Anpassen (306) einer Video-Umcodierrate für den Teilnehmer auf der Grundlage von Daten im Profil.

7. Verfahren nach Anspruch 1, ferner umfassend:
Verringern einer Datenrate für Videodaten, die an Teilnehmer in der überbelegten Zelle (102, 204) gerichtet sind, unter Verwendung einer Video-Umcodiervorrichtung (112, 113,213).

8. Verfahren nach Anspruch 7, ferner umfassend:
Auswählen einer neuen Datenrate für einzelne Teilnehmer in der überbelegten Zelle (102, 204) auf der Grundlage eines Typs von Videodaten, die an jeden Teilnehmer gesendet werden.

9. Verfahren nach Anspruch 7, ferner umfassend:
Auswählen einer neuen Datenrate für einzelne Teilnehmer in der überbelegten Zelle (102, 204) auf der Grundlage eines Teilnehmerprofils.

10. System zum Steuern von Video-Umcodierung in einem drahtlosen Netzwerk (101-104, 201-202), umfassend:
einen Prozessor (109, 210), der dafür eingerichtet ist, Daten zu analysieren, worin der Prozessor (109, 201) ferner eingerichtet ist zum:
Bestimmen (302) eines Zellenüberbelegungsgrades aus den Daten;
Erkennen (303), wann eine Zelle (102, 204) einen Überbelegungsgrad oberhalb eines ersten Schwellwerts hat;
Übertragen (304) einer ersten Warnmeldung zu einer Netzwerkrichtlinien-Verwaltungsinstanz (114, 214), die eine Video-Umcodiervorrichtung (112, 113, 213) steuert, wenn der Zellenüberbelegungsgrad oberhalb des ersten Schwellwerts ist;
Erkennen (308), wann der Zellenüberbelegungsgrad unter einen zweiten Schwellwert gesunken ist, wobei der zweite Schwellwert auf oder unter den ersten Schwellwert eingestellt ist; und
Übertragen (309) einer zweiten Warnmeldung zu der Netzwerkrichtlinien-Verwaltungsinstanz, wenn der Zellenüberbelegungsgrad unterhalb des zweiten Schwellwerts ist;
worin:
- eine Vielzahl von Überwachungssonden (108a, 108b) mit einer oder mehreren Netzwerkschnittstellen gekoppelt sind, wobei die Überwachungssonden dafür eingerichtet sind, Daten auf unaufdringliche Weise durch Sniffing von Daten von den Netzwerkschnittstellen passiv zu erfassen; und
- der Prozessor (109, 210) dafür eingerichtet ist, die von den Netzwerkschnittstellen erfassten Daten als die besagten Daten zu verarbeiten.

11. System nach Anspruch 10, worin die Netzwerkrichtlinien-Verwaltungsinstanz (114, 214) dafür eingerichtet ist, Videodatenraten-Richtlinien zu erkennen, die den gegenwärtig in der Zelle aktiven Teilnehmern zugeordnet sind, und die Videodatenraten-Richtlinien auf der Grundlage eines gegenwärtigen Zellenüberbelegungsgrades durchzusetzen.

12. System nach Anspruch 10, worin die Netzwerkrichtlinien-Verwaltungsinstanz (114, 214) ein Richtliniendurchsetzungspunkt, PEP, ein Richtlinienentscheidungspunkt, PDP, eine Richtlinien-, Abrechnungs- und Steuerungs-(PCC-)Funktion, eine Richtlinien- und Abrechnungsregelfunktion, PCRF, oder eine Richtlinien- und Abrechnungsausführungsfunktion, PCEF, ist.

13. System nach Anspruch 10, worin die Netzwerkschnittstellen Funkzugangsnetz-(RAN-)Schnittstellen sind.

14. System nach Anspruch 10, worin die Netzwerkschnittstellen mindestens eines von Folgendem umfassen: eine IuB-Schnittstelle, eine Iu-CS-Schnittstelle und eine Iu-PS-Schnittstelle.

15. System nach Anspruch 10, worin die Netzwerkschnittstellen mindestens eines von Folgendem umfassen: eine S1-MME-Schnittstelle, eine X2-Schnittstelle und eine S11-Schnittstelle.

16. System nach Anspruch 10, ferner umfassend:
eine Video-Umcodiervorrichtung, die mit den Netzwerkschnittstellen gekoppelt und dafür eingerichtet ist, unter Steuerung der Netzwerkrichtlinien-Verwaltungsinstanz eine Datenrate für Videodaten, die an die Zelle gesendet werden, zu modifizieren.

17. System nach Anspruch 16, worin die Netzwerkrichtlinien-Verwaltungsinstanz (114, 214) ferner dafür eingerichtet ist, die Richtlinien durchzusetzen, indem Videodaten, die einem oder mehreren Teilnehmern in der Zelle bereitgestellt werden, auf der Grundlage eines Teilnehmerprofils begrenzt werden.

18. System nach Anspruch 16, worin die Netzwerkrichtlinien-Verwaltungsinstanz (114, 214) ferner dafür eingerichtet ist, die Richtlinien durchzusetzen, indem Videodaten, die einem oder mehreren Teilnehmern in der Zelle (102, 204) bereitgestellt werden, auf der Grundlage eines Typs der Benutzereinrichtung (108, 208) begrenzt werden.

## Revendications

1. Procédé pour contrôler un transcodage de vidéo dans un réseau sans fil (101-104, 201-202) comprenant les étapes suivantes :
capturer (301) des données depuis des interfaces de réseau et un équipement d'utilisateur (108, 208) ;
déterminer (302) un niveau d'encombrement de cellule à partir des données capturées, où les données capturées depuis les interfaces de réseau comprennent des données capturées de manière passive, de manière non-intrusive en reniflant des données depuis les interfaces de réseau ;
identifier (303) lorsqu'une cellule (102, 204) a un niveau d'encombrement au-dessus d'un premier seuil, le premier seuil étant fixé à un point en-dessous d'une capacité maximale de la cellule (102, 204) ;
transmettre (304) une première alerte à un dispositif de transcodage de vidéo (112, 113, 213) lorsque le niveau d'encombrement de cellule est au-dessus du premier seuil ;
identifier (308) lorsque le niveau d'encombrement de la cellule a chuté en-dessous d'un second seuil, le second seuil étant défini au premier seuil ou en-dessous du premier seuil ; et
transmettre (309) une seconde alerte au dispositif de transcodage de vidéo lorsque le niveau d'encombrement de cellule (112, 113, 213) est en-dessous du second seuil.

2. Procédé selon la revendication 1, comprenant en outre les étapes suivantes :
identifier (305) des abonnés actuellement actifs dans la cellule (102, 204) ; et
inclure des identités d'abonnés dans la première alerte et la seconde alerte.

3. Procédé selon la revendication 1, comprenant en outre les étapes suivantes :
identifier (305) des adresses de destination pour des abonnés actuellement actifs dans la cellule (102, 204) ; et
inclure des adresses de destination d'abonnés dans la première alerte et la seconde alerte.

4. Procédé selon la revendication 1, comprenant en outre les étapes suivantes :
identifier un identifiant de cellule pour la cellule (102, 204) ; et
inclure l'identifiant de cellule dans la première alerte et la seconde alerte.

5. Procédé selon la revendication 1, dans lequel la première alerte (306) donne pour instruction au dispositif de transcodage de vidéo (112, 113, 213) de réduire un débit de données pour des données vidéo envoyées à des abonnés dans la cellule (102, 204), et la seconde alerte donne pour instruction au dispositif de transcodage de vidéo d'augmenter un débit de données pour des données vidéo envoyées à des abonnés dans la cellule (102, 204).

6. Procédé selon la revendication 1, comprenant en outre les étapes suivantes :
identifier un abonné dans la cellule encombrée (102, 204) ;
récupérer un profil pour l'abonné ; et
ajuster (306) un débit de transcodage de vidéo pour l'abonné sur la base de données dans le profil.

7. Procédé selon la revendication 1, comprenant en outre l'étape suivante :
réduire un débit de données, au moyen d'un dispositif de transcodage de vidéo (112, 113, 213), pour des données vidéo dirigées vers des abonnés situés dans la cellule encombrée (102, 204).

8. Procédé selon la revendication 7, comprenant en outre l'étape suivante :
sélectionner un nouveau débit de données pour des abonnés individuels dans la cellule encombrée (102, 204) sur la base d'un type de données vidéo envoyées à chaque abonné.

9. Procédé selon la revendication 7, comprenant en outre l'étape suivante :
sélectionner un nouveau débit de données pour des abonnés individuels dans la cellule encombrée (102, 204) sur la base d'un profil d'abonné.

10. Système pour contrôler un transcodage de vidéo dans un réseau sans fil (101-104, 201-202), comprenant :
un processeur (109, 210) conçu pour analyser des données, où le processeur (109, 201) est en outre conçu pour :
déterminer (302) un niveau d'encombrement de cellule à partir des données ;
identifier (303) lorsqu'une cellule (102, 204) a un niveau d'encombrement au-dessus d'un premier seuil ;
transmettre (304) une première alerte à une entité de gestion de politique de réseau (114, 214) contrôlant un dispositif de transcodage de vidéo (112, 113, 213) lorsque le niveau d'encombrement de cellule est au-dessus du premier seuil ;
identifier (308) lorsque le niveau d'encombrement de la cellule a chuté en-dessous d'un second seuil, le second seuil étant défini au premier seuil ou en-dessous du premier seuil ; et
transmettre (309) une seconde alerte à l'entité de gestion de politique de réseau lorsque le niveau d'encombrement de cellule est en-dessous du second seuil ;
où
- une pluralité de sondes de surveillance (108a, 108b) sont couplées à une ou plusieurs interfaces de réseau, les sondes de surveillance étant conçues pour capturer des données de manière passive, depuis les interfaces de réseau, selon un mode non-intrusif en reniflant des données depuis les interfaces de réseau ; et
- le processeur (109, 210) est conçu pour analyser, comme dites données, les données capturées depuis les interfaces de réseau.

11. Système selon la revendication 10, dans lequel l'entité de gestion de politique de réseau (114, 214) est conçue pour identifier des politiques de débit de données vidéo associées aux abonnés actuellement actifs dans la cellule et pour faire appliquer les politiques de débit de données vidéo sur la base d'un niveau d'encombrement de cellule en cours.

12. Système selon la revendication 10, dans lequel l'entité de gestion de politique de réseau (114, 214) est un point d'application de politique, PEP, un point de décision de politique, PDP, une fonction de facturation et de contrôle de politique, PCC, une fonction de règles de facturation et de politique, PCRF, ou une fonction d'exécution de facturation et de politique, PCEF.

13. Système selon la revendication 10, dans lequel les interfaces de réseau sont des interfaces de réseau d'accès radio, RAN.

14. Système selon la revendication 10, dans lequel les interfaces de réseau comprennent au moins une interface parmi une interface Iub, une interface Iu-CS, et une interface Iu-PS.

15. Système selon la revendication 10, dans lequel les interfaces de réseau comprennent au moins une interface parmi une interface S1-MME, une interface X2, et une interface S11.

16. Système selon la revendication 10, comprenant en outre :
un dispositif de transcodage de vidéo couplé aux interfaces de réseau et, sous contrôle de l'entité de gestion de politique de réseau, conçu pour modifier un débit de données pour des données vidéo transmises à la cellule encombrée.

17. Système selon la revendication 16, dans lequel l'entité de gestion de politique de réseau (114, 214) est en outre conçue pour faire appliquer les politiques en limitant des données vidéo fournies à un ou plusieurs abonnés dans la cellule sur la base d'un profil d'abonné.

18. Système selon la revendication 16, dans lequel l'entité de gestion de politique de réseau (114, 214) est en outre conçue pour faire appliquer les politiques en limitant des données vidéo fournies à un ou plusieurs abonnés dans la cellule (102, 204) sur la base d'un type d'équipement d'utilisateur (108, 208).
